# EUROPÄISCHE PATENTSCHRIFT

(11) **EP 3 422 584 B1**
(45) Veröffentlichungstag und Bekanntmachung des Hinweises auf die Patenterteilung: **29.12.2021**
(21) Anmeldenummer: 18180252.1
(22) Anmeldetag: 27.06.2018
(51) Int. Cl.: H04B 1/3888

(54) **VERFAHREN ZUM HERSTELLEN EINES RÄUMLICH GEFORMTEN OBERFLÄCHENSCHUTZELEMENTS FÜR ELEKTRONISCHE GERÄTE**
METHOD FOR PRODUCING A SPATIALLY FORMED SURFACE PROTECTION ELEMENT FOR ELECTRONIC DEVICES
PROCÉDÉ DE FABRICATION D'UN ÉLÉMENT PROTECTEUR DE SURFACE FORMÉ EN TROIS DIMENSIONS POUR APPAREILS ÉLECTRONIQUES

(30) Priorität: 27.06.2017 DE 102017114259
(43) Veröffentlichungstag der Anmeldung: 02.01.2019
(73) Patentinhaber: Böhnke, Christian, 48159 Münster (DE); Kempkes, Daniel, 46399 Bocholt (DE)
(72) Erfinder: Böhnke, Christian, 48159 Münster (DE); Kempkes, Daniel, 46399 Bocholt (DE)
(74) Vertreter: Tarvenkorn, Oliver

(56) Entgegenhaltungen:
- JP-A- 2008 077 062
- US-A1- 2015 104 624
- US-A1- 2017 149 467

## Beschreibung

Die Erfindung betrifft ein Verfahren zum Herstellen eines räumlich geformten Oberflächenschutzelements für ein Gehäuse eines elektronischen Geräts.

Displays von hochwertigen elektronischen Geräten wie beispielsweise Smartphones und Tablets werden von ihren Benutzern oft mit einer Schutzfolie versehen, um das Display vor Kratzern und anderen Beschädigungen zu schützen. Hochwertige Displayschutzfolien bestehen meistens aus einer PET-Trägerschicht, die auf der einen Seite mit einer Kratzschutzbeschichtung versehen ist und auf der anderen Seite mit einer Zusatzschicht auf Silikonbasis, über welche die Anhaftung auf dem Glasdisplay des elektronischen Geräts erfolgen soll.

Der Nachteil bekannter Displayschutzfolien besteht darin, dass sie sehr starr sind und praktisch nur in ebenen Zuschnitten einsetzbar sind. Dies führt dazu, dass die aus Designgründen häufig abgerundeten Kantenbereiche des Displays von der Displayschutzfolie nicht überdeckt werden können. Neben dem fehlenden Schutz im Kantenbereich ist auch die sichtbare Seitenkante der auf dem Display aufliegenden Displayschutzfolie störend. Eine Verformung bekannter Displayschutzfolien zu einem dreidimensionalen Gebilde, das in den Randbereichen gekrümmt ist, ist nicht ohne Weiteres möglich, da es einerseits beim Erwärmen zu Strukturveränderungen in der Trägerfolie kommt, weil eingefrorene Spannungen abgebaut werden, und andererseits die harte, Kratzschutze Beschichtung kaum beschädigungsfrei verformbar ist. Hinzu kommt, dass kleinste Geometrieabweichungen zwischen der gebogenen Außenkante des Displays und der Innenseite des Displayschutzelements zu Ablösungen führen, die optisch wahrnehmbar sind und als störend empfunden werden.

Auch wenn Qualitätsmängel am ehesten bei einem Displayschutzelement sichtbar werden, das auf einem Glasdisplay aufgelegt ist, gelten die obenstehenden Überlegungen genauso für Schutzelemente, die auf andere Gehäuseteile wie beispielsweise die Rückseite eines Smartphones aufgebracht werden, um die Oberfläche des Geräts zu schützen. Daher bezieht sich die Erfindung generell auf ein Oberflächenschutzelement, was insbesondere, aber nicht nur, Displayschutzelemente einschließt.

US 20170149467A1 beschreibt die Herstellung eines Schutzgehäuses für ein Smartphone, bei dem ein Gewebezuschnitt durch Thermoformen zu einem dreidimensionalen Körper geformt wird und dann mit einer transparenten Beschichtung versehen wird.

Die JP 2008077062A1 offenbart eine kratzfeste Beschichtung in Form einer Folie, die die optischen Eigenschaften eines elektronischen Displays nicht nachteilig beeinflussen soll. Diese Folie kann aber bei gerundeten Gerätekanten nicht faltenfrei aufgebracht werden.

US 20150104624A1 gibt eine mit UV-Licht aushärtbare Zusammensetzung an, die auf eine dreidimensional geformte Folie aufgebracht werden kann.

Die Aufgabe der vorliegenden Erfindung besteht darin, ein transparentes Displayschutzelement für ein Gehäuse eines elektronischen Geräts mit gekrümmten Kantenbereichen herzustellen.

Diese Aufgabe wird durch ein Verfahren zum Herstellen eines räumlich geformten Oberflächenschutzelements für ein Gehäuse eines elektronischen Geräts mit den Merkmalen des Anspruchs 1 erreicht.

Hervorzuheben ist, dass das Verfahren besonders für transparente Oberflächenschutzelemente, insbesondere Displayschutzelemente geeignet ist, weil dabei die höchsten Anforderungen an die Homogenität der aufgebrachten Kratzschutzschicht gestellt werden. Das erfindungsgemäße Verfahren schließt aber genauso die Bedruckung von opaken oder durchgefärbten Trägerfolien mit ein.

Der Auftrag einer Kratzschichtbeschichtung in einem Pixel-Druckverfahren ermöglicht es in überraschender Weise, ein Oberflächenschutzelement auszubilden, das gar keine Trägerfolie umfasst, wo also die Kratzschutzbeschichtung direkt auf das Substrat wie beispielsweise das Smartphonedisplay aufgedruckt wird. Das Digitaldruckverfahren ermöglicht dies, weil es ohne Andruckkräfte auskommt und mit sehr präzisen Begrenzungen der Druckfläche einsetzbar ist. So wird gewährleistet, dass das Display weder mechanisch beschädigt wird noch dass Lack oder Lösemittel durch Spalte in das Gerät eindringen. Es ist also quasi die Schaffung einer "in-situ-Kratzfestbeschichtung" auf jedem Gerät möglich, das einen überwiegend ebenen Flächenbereich aufweist, der an wenigstens einer Kante stark gerundet ausläuft. Der Vorteil der in-situ Bildung einer Kratzschutzbeschichtung liegt darin, dass in der Oberflächenschutzschicht mangels vorgeformter Trägerfolie keinerlei eingefrorene Spannungen vorliegen und folglich keine Rückstellkräfte entstehen.

Bei dieser in-situ Variante des Verfahrens kann zuvor eine Releaseschicht auf das Substrat aufgebracht werden, beispielsweise in Form einer Releasefolie, die zumindest die ebenen Flächenbereiche des Substrats überdeckt und die das spätere Entfernen der aufgedruckten Kratzschutzbeschichtung ermöglicht.

Möglich ist weiterhin, nicht nur die die Oberseite abschließende Kratzschutzbeschichtung pixelweise aufzudrucken, sondern in gleicher Weise zuvor eine Trennschicht aufzudrucken, die ebenso wie der vorgefertigte Trennfolienzuschnitt dazu dient, das spätere Ablösen der Kratzschutzbeschichtung von dem Substrat zu ermöglichen. Inbesondere ist dies vorteilhaft, wenn kein einzelnes, abnehmbares Displayschutzelement hergestellt wird, sondern das Gehäuse des elektronischen Geräts ohne Trägerschicht, durch direktes Aufdrucken, beschichtet wird.

Bei einer anderen bevorzugten Ausführungsform des Verfahrens wird ein separates Oberflächen- oder Displayschutzelement hergestellt, das auf einer vorgeformten Trägerfolie basiert. Dabei wird zunächst die Trägerfolie, welche vorzugsweise an der Unterseite bereits eine Silikon-Haftbeschichtung enthält, vorgeformt, sodass sie die vorgesehene dreidimensionale Struktur einnimmt, die geeignet ist, sich vollflächig, auch in den Krümmungsbereichen, an die Gehäusekontur anzulegen, beispielsweise an die mit einem Radius von mehreren Millimetern gerundeten Kanten der Glasoberfläche des Displays anzulegen.

Bei der Verformung wird ein mögliches Rückstellverhalten der Trägerfolie mitberücksichtigt, d. h., in den Kantenbereichen wird eine Verformung vorgenommen, die zu einer etwas stärkeren Krümmung führt als bei den Kanten des Geräts selbst. Das Oberflächenschutzelement ist somit in Bezug auf das Glasdisplay des Geräts vorgespannt, sodass Ablösungen im Kantenbereich auch dann verhindert werden, wenn es zu einer Rückfederung in der Trägerfolie kommt.

Erfindungswesentlich ist, dass die Kratzschutzbeschichtung auf dem zu verformenden Folienabschnitt, aus dem das Oberflächenschutzelement gebildet werden soll, noch nicht vorhanden ist, sondern dass diese erst nachträglich auf das bereits dreidimensional vorgeformte Gebilde aufgetragen wird, wozu erfindungsgemäß ein Druckverfahren benutzt wird, bei dem Tropfen einer gelartig eingestellten Komposition zur Ausbildung einer Kratzschutzbeschichtung z. B. in einer punktförmigen Rastermatrix aufgedruckt werden. Die aufgedruckten Tröpfchen verlaufen und vereinigen sich, sodass sich eine durchgängige, optisch klare Kratzschutzbeschichtung zumindest im Bereich des ebenen Anteils des Elements ergibt. In den Randbereichen kann die aufgesprühte Flüssigkeit ebenfalls etwas verlaufen, sodass sie sich, der Krümmung der Kante folgend, an diese anlegt.

Aufgrund der erfindungsgemäßen Verwendung einer Drucktechnologie ist es insbesondere auch möglich, im Bereich der Krümmungen partiell dickere Schichten dadurch zu erzeugen, dass diese Zonen mehrfach bedruckt werden. Dadurch kann auch die Schichtdicke der Kratzschutzbeschichtung in diesem Bereich etwas stärker sein als in den ebenen Flächenbereichen. Zwar ergibt sich dann bei größerer Schichtstärke in der Kratzschutzbeschichtung am Oberflächenschutzelement mitunter eine etwas vom Krümmungsradius des Displays abweichende Krümmung, jedoch fällt diese optisch nicht auf. Dies führt aber wegen der größeren Schichtdicke zu einem besonders effektiven Kantenschutz in den besonders gefährdeten seitlichen Kantenbereichen.

Ein weiterer wesentlicher Vorteil des erfindungsgemäßen Verfahrens besteht darin, dass die ausgehärtete Kratzschutzbeschichtung die vorgeformte Trägerfolie, insbesondere PET-Trägerfolie, gegen Rückstellungen und andere Formänderungen stabilisiert.

Gerade wenn im Kantenbereich eine dickere Schichtstärke der Kratzschutzbeschichtung eingestellt wird, führt dies zur Ausbildung eines stabilen äußeren Rahmenbereichs in der oberen Deckschicht des Oberflächenschutzelements, der den geometrisch sensiblen Krümmungsbereich bei dem Trägerelement verstärkt und damit Ablösungen des Displayschutzelements gerade in diesem Bereich entgegenwirkt.

Wenn beispielsweise ein besonders dünnes Oberflächenschutzelement gewünscht ist, dann kann mit dem Verfahren nach der Erfindung sogar eine Trägerfolie mit einer PET-Schichtstärke von nur etwa 50 µm zuzüglich Haftvermittlerschicht, verwendet werden. Dies hat den Vorteil, dass die Vorformung inline erfolgen kann, indem ein Folienzuschnitt mit einem Vakuumgreifer gegriffen wird, der eine Negativform für das herzustellende Oberflächenschutzelement bildet. Der Folienzuschnitt legt sich daran an, muss aber durch Vakuumdüsen an der Form gehalten werden. Durch die aufgedruckte und ausgehärtete Kratzschutzbeschichtung wie auch durch den Einfluss der damit einhergehenden Wärmebehandlung wird die per Vakuumsauger aufgezwungene Form fixiert. Die erzielte Formstabilität ist so groß, dass die Rückstellkräfte kleiner sind als die über die Haftvermittlerschicht bewirkten Haftkräfte. Auf diese Weise ist sichergestellt, dass sich das Oberflächenschutzelement im Einsatz nicht von der zu schützenden Oberfläche löst und sich keine störenden Luftblasen in der Zwischenschicht bilden.

Bei größeren Schichtdicken der Trägerfolie von 200 µm und mehr ist eine Umformung z. B. durch Tiefziehen vorteilhaft.

Der Auftrag der Komposition zur Herstellung einer Kratzschutzbeschichtung erfolgt insbesondere auf einer Druckvorrichtung mit einem Flachbett, auf dem das vorgeformte Displayschutzelement abgelegt ist, wobei dieses vorzugsweise noch auf einer Form aufliegt und daran abgestützt ist. Durch die Auflage auf der Form können dann auch besonders die seitlichen Kantenbereiche beim Auftrag der Kratzschutzbeschichtung gut ausgebildet werden, da die aufgesprühten Tröpfchen bis zur Oberseite des Formelements, das mit einem geeigneten Trennmittel versehen ist, verlaufen können, sodass sich dort eine geradlinige Kante ausbildet.

Eine weitere Möglichkeit besteht darin, entweder den Druckkopf im Kantenbereich zu drehen, sodass die Auftragsrichtung in etwa radial zum Krümmungsverlauf ist oder das vorgeformte Substrat relativ zum Druckkopf in geneigter Lage zu positionieren.

Ein beispielhafter Schichtaufbau ist dann von unten nach oben wie folgt:
- Release-Liner als Schutzabdeckung der Haftschicht des Displayschutzelements - Stärke ca. 50 µm;
- Haftschicht, bestehend aus einem Silicon-Pressure Sensitive Adhesive, Stärke ca. 25 µm;
- PET-Trägerschicht, Stärke ca. 100 µm;
- Kratzschutzschicht mit variabler Schichtdicke über die Gesamtfläche
- Release-Liner als Schutzabdeckung der Kratzschutzschicht des Displayschutzelements - Stärke ca. 50 µm;

Die Vorbereitung und Durchführung des Druckvorgangs erfolgen vorzugsweise mit den folgenden Schritten:
- Zunächst erfolgt die Vorformung des Trägerelements, um dieser die gewünschte dreidimensionale Struktur aufzuprägen. Dies kann inline mit der Bedruckung oder in einem vorgeschalteten Verfahrensabschnitt erfolgen.
- Unmittelbar vor dem Druckvorgang wird das vorgeformte Trägerelement auf einem formstabilen Druckträger positioniert, und die zu bedruckende Oberfläche wird gereinigt und ggf. mit einem Primer versehen.
- Danach erfolgt der Auftrag der Kratzschutzbeschichtung, und zwar in Form eines tröpfchenweisen Auftrags im Digitaldruckverfahren.
- Die auf diese Weise bedruckte Oberfläche wird belüftet und mit Infrarotstrahlung erwärmt, um anfänglich den Verlauf der Tröpfchen und die Ausbildung einer homogenen Schicht zu fördern und danach, um die Aushärtung einzuleiten, indem enthaltenes Lösungsmittel verdunstet wird.
- Um Überhitzungen in den dünnen Schichten des Trägerelements zu vermeiden, wird es vorzugsweise zwischengekühlt.
- Die aufgedruckte Zusammensetzung wird mit UV-Licht ausgehärtet. Nach entsprechender Belichtung mit UV-Licht bildet sich eine klare, Kratzschutzschicht eines Displayschutzelements.

Die Erfindung wird nachfolgend anhand des in den Zeichnungen dargestellten Ausführungsbeispiels näher erläutert. Die Figuren zeigen im Einzelnen:
- Fig. 1: ein vorgeformtes, dreidimensionales Trägerelement in perspektivischer Ansicht;
- Fig. 2: einen möglichen Schichtaufbau des Trägerelements im Schnitt;
- Fig. 3, 4: jeweils eine Formhälfte für ein Umformwerkzeug in perspektivischer Ansicht;
- Fig. 5, 6: den Aufdruck auf ein Trägerelement in zwei Schritten, jeweils in schematischer seitlicher Ansicht;
- Fig. 7: die Schichtenfolge in einem Oberflächenschutzelement im Schnitt;
- Fig. 8, 9: den Aufdruck auf ein Smartphonedisplay in zwei Schritten, jeweils in schematischer seitlicher Ansicht;
- Fig. 10: die Verfahrensschritte in einem Flussdiagramm;

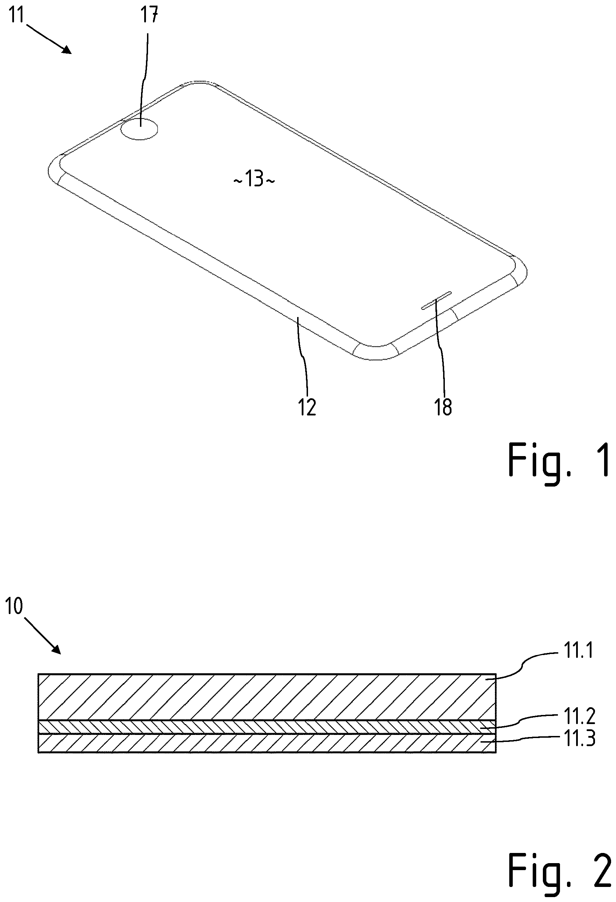

Figur 1 zeigt ein schon räumlich vorgeformtes Trägerelement 11, das als Kernschicht aus einer transparenten Polyester-Kunststofffolie gebildet ist. Auch Ausstanzungen 17, 18 für Kamera-, Mikrofon- und Lautsprecheröffnungen sind bereits eingebracht. Das Trägerelement 11 ist bereits räumlich vorgeformt ist, so dass gerundete Seitenkanten 12 ausgebildet sind. Diese sind geeignet, die Displaykanten eines gerundeten Displays eines Smartphones zu überdecken und zu schützen. Ein zentraler Flächenbereich 13 ist eben.

Ein geeigneter Schichtaufbau stellt sich beispielsweise wie in Figur 2 dar:
- Unterseite: Haftvermittlerschicht 11.2 auf Silikonbasis. Diese dient dazu, die Haftung mit einem Glasdisplay eines Smartphones oder eines anderen Geräts herzustellen und ist mit einem Releaseliner 11.3 abgedeckt.
- Trägerschicht 11.1 aus PET in einer Stärke von 280 µm.
- Oberseite: die Oberfläche der Trägerschicht 11.1 kann zunächst für Transport und Lagerung ebenfalls abgedeckt sein, liegt aber unmittelbar vor Beginn der Durchführung des Verfahrens frei

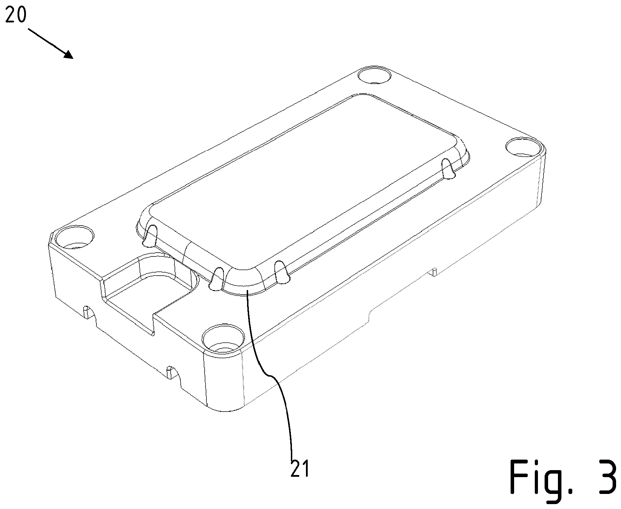

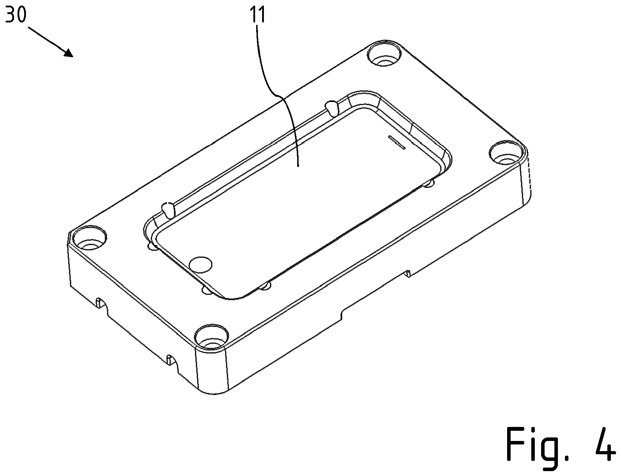

Figur 3 zeigt eine Formhälfte 20. Diese wird zusammen mit dem Gegenstück, der in Figur 4 abgebildeten weiteren Formhälfte 30, eingesetzt, um die räumliche Verformung einer PET-Kunststofffolie vorzunehmen und daraus das dreidimensionale Trägerelement 11 zu bilden. Außerdem dient die Formhälfte 20 nach dem Abnehmen der Formhälfte 30 als Stützform für den folgenden Druckvorgang. Das vorgeformte Trägerelement wird 11 auf der Patrize 21 in der Formhälfte 20 vollflächig abgestützt.

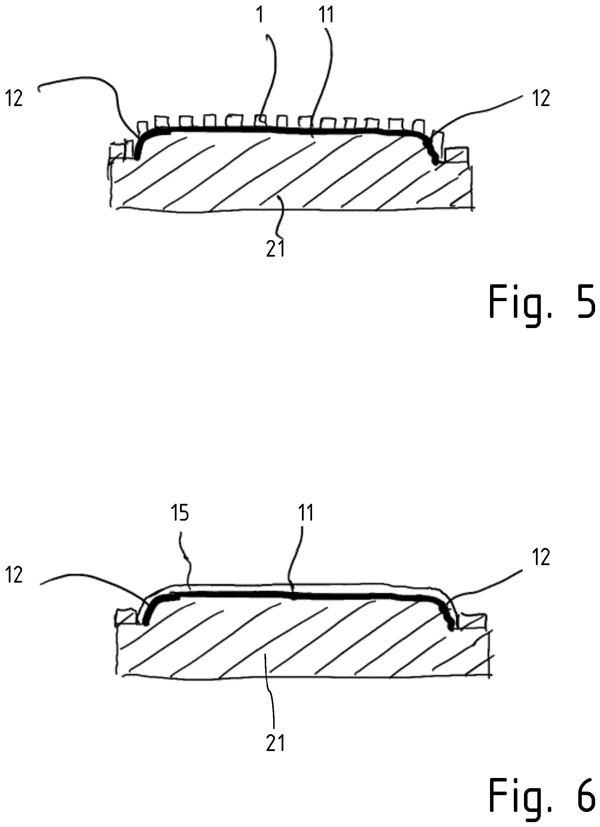

Figur 5 zeigt ein Trägerelement 11, das auf der Patrize 21 aufliegt, die hier zugleich als Werkstückträger für die Bedruckung dient. Über einen Druckkopf wird eine gelartige Zusammensetzung einer Druckzusammensetzung mit einzelnen Tröpfchen 1 pixelweise in einem Druckraster aufgebracht. Da der Weg des Druckkopfes horizontal ist, ist der Abstand zwischen Druckkopf und Trägerelement 11 im Bereich der gebogenen Kante 12 größer. Die Tröpfchen 1 verlaufen und vereinigen sich zu einer Kratzschutzschicht 15, siehe Fig. 6.

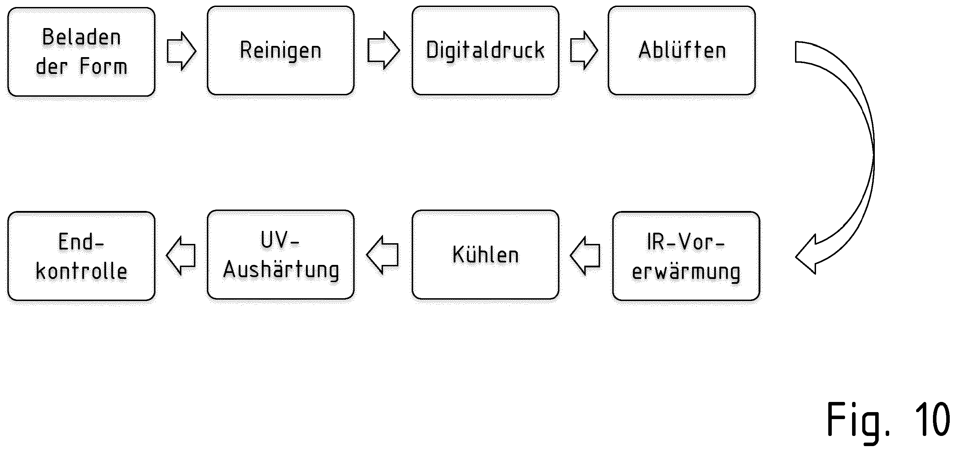

Nach dem tröpfchenweisen Auftrag im Digitaldruckverfahren werden die weiteren Schritte, die in der schematischen Verfahrensdarstellung in Figur 10 dargestellt sind, durchgeführt:
Die bedruckte Oberfläche wird belüftet und mit Infrarotstrahlung erwärmt, um anfänglich den Verlauf der Tröpfchen zu fördern und dann die Aushärtung einzuleiten, indem enthaltenes Lösungsmittel verdunstet wird. Um Überhitzungen im Trägerelement 11 zu vermeiden, wird es vorzugsweise zwischengekühlt.

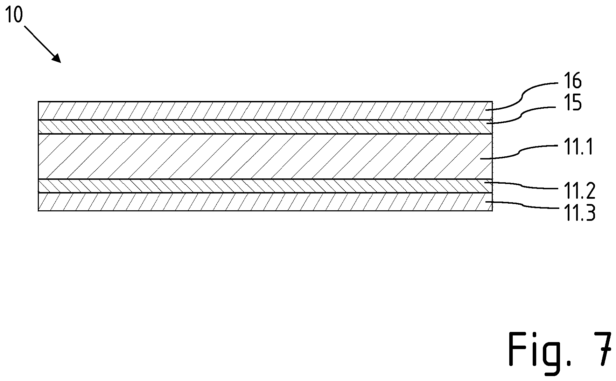

Die aufgedruckte Zusammensetzung ist mit UV-Licht aushärtbar. Nach entsprechender Belichtung mit UV-Licht bildet sich eine klare Kratzschutzschicht 15 auf dem Trägerelement 11. Dieses wird dann noch auf der mit der Kratzschutzschicht 15 versehenen Seite mit einer ablösbaren Schutzschicht 16 für Verpackung, Transport und Verkauf versehen, so dass sich ein Oberflächenschutzelement 10 mit der in der Schnittansicht nach Figur 7 dargestellten Schichtenfolge ergibt. Die Dickenverhältnisse sind hierbei nicht maßstäblich.

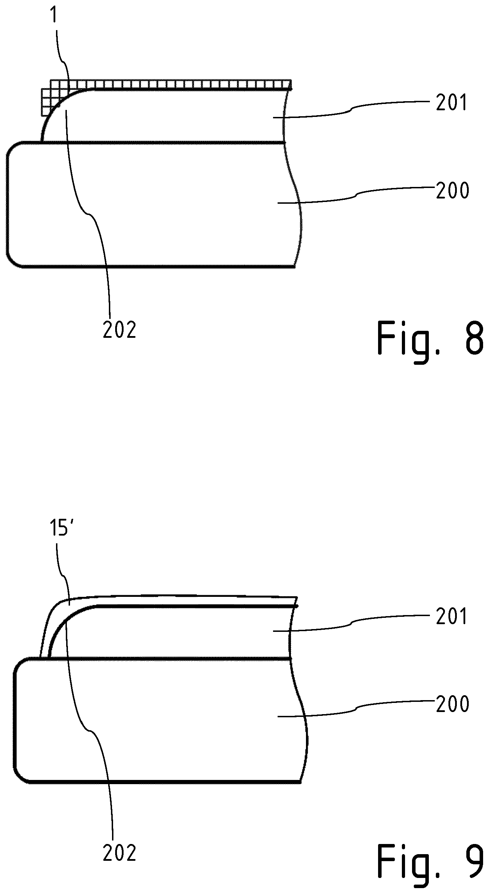

Figur 8 zeigt eine weitere Variante des erfindungsgemäßen Verfahrens. Hierbei dient keine vorgeformte Kunststofffolie als Substrat, sondern der pixelweise Aufdruck der aushärtbaren Kunststoffzusammensetzung in Form von Tröpfchen 1 erfolgt direkt auf ein Glasdisplay 201 eines Smartphones 200, welches stark gerundete Seitenkanten besitzt.

Das Druckverfahren ermöglicht es, wie durch die als Kästchen in Figur 8 symbolisierten Tröpfchen 1 im Bereich der Kante 12 zusätzliche Lagen aufzubringen, bevor die vollflächige Bedruckung erfolgt. Dadurch, dass die Tröpfchen der Schwerkraft folgen und gelartig eingestellt sind, verlaufen sie, und es bildet sich eine homogene Schicht 15' aus (Figur 9), die dann durch die in Figur 10 dargestellten weiteren Schritte wie Lüften, Kühlen und UV-Härten zu einer beständigen Kratzschutzschicht ausgebildet wird.

## Patentansprüche

1. Verfahren zum Herstellen eines räumlich geformten Oberflächenschutzelements (10) für ein Gehäuse eines elektronischen Geräts (200), wobei in einem Kunstharz-Druckverfahren eine aushärtbare Kunstharz-Zusammensetzung zur Ausbildung einer Kratzschutzbeschichtung (15) als Tröpfchen (1) pixelweise in einem Druckraster auf ein Substrat in Form eines dreidimensionalen Trägerelements (11) oder eines dreidimensionalen Oberflächenbereichs (201) des Geräts (200) aufgedruckt wird und die aufgedruckte Kunstharz-Zusammensetzung (1) anschließend ausgehärtet wird.

2. Verfahren nach Anspruch 1, **dadurch gekennzeichnet, dass** vor dem Aufdrucken der Kratzschutzbeschichtung (15) eine Trennfolie auf das Substrat aufgebracht wird und die Kratzschutzbeschichtung (15) auf die Trennfolie aufgedruckt wird.

3. Verfahren nach Anspruch 1, **dadurch gekennzeichnet, dass** vor dem Aufdrucken der Kratzschutzbeschichtung (15) eine Trennschicht als Tröpfchen (1) pixelweise in einem Druckraster auf das Substrat aufgedruckt und ausgehärtet wird, und dass die Kratzschutzbeschichtung (15) anschließend auf die Trennschicht aufgedruckt wird.

4. Verfahren nach einem der Ansprüche 1 bis 3, **dadurch gekennzeichnet, dass** im Bereich einer gerundeten Kante (12; 202) des Substrats eine größere Schichtstärke der Kunstharz-Zusammensetzung (1) aufgedruckt wird als in benachbarten ebenen Flächenbereichen auf dem Substrat.

5. Verfahren nach einem der Ansprüche 1 bis 4, **dadurch gekennzeichnet, dass** ein Oberflächenschutzelement (10) hergestellt wird, das wenigstens einen ebenen Flächenbereich (13) aufweist, der randseitig in wenigstens einen, im Querschnitt gerundeten Kantenbereich (12) mit linearer Erstreckung übergeht.

6. Verfahren nach einem der Ansprüche 1 bis 5, **dadurch gekennzeichnet, dass** die Kunstharz-Zusammensetzung mittels UV-Strahlung ausgehärtet wird.

7. Verfahren nach einem der Ansprüche 1 bis 6, **dadurch gekennzeichnet, dass** die Kratzschutzbeschichtung auf eine Trägerschicht (11) aus einer dreidimensional vorgeformten Kunststofffolie aufgedruckt wird.

8. Verfahren nach Anspruch 7, **dadurch gekennzeichnet, dass** das Trägerelement (11) eine aus einer PET-Folie mit einer Stärke von 50 µm bis 300 µm gebildete Kernschicht (11.1) umfasst.

9. Verfahren nach Anspruch 7 oder 8, **dadurch gekennzeichnet, dass** das Trägerelement (11) auf einer nicht zu bedruckenden Unterseite eine Haftvermittlerschicht (11.2) aufweist.

## Claims

1. Method for producing a three-dimensionally shaped surface protection element (10) for a housing of an electronic device (200), wherein a synthetic resin printing method is used to print a curable synthetic resin composition forming a scratch protection coating (15) as droplets (1) pixel by pixel in a printing pattern on a substrate in the form of a three-dimensional carrier element (11) or a three-dimensional surface area (201) of the device (200), and the printed synthetic resin composition (1) is then cured.

2. Method according to Claim 1, **characterized in that** before the printing of the scratch protection coating (15), a release film is applied to the substrate and the scratch protection coating (15) is printed on the release film.

3. Method according to Claim 1, **characterized in that** before the printing of the scratch protection coating (15), a release layer is printed as droplets (1) pixel by pixel in a printing pattern on the substrate and is cured, and **in that** the scratch protection coating (15) is then printed on the release layer.

4. Method according to one of Claims 1 to 3, **characterized in that** a greater layer thickness of the synthetic resin composition (1) is printed in the area of a rounded edge (12; 202) of the substrate than in adjacent flat surface areas on the substrate.

5. Method according to one of Claims 1 to 4, **characterized in that** a surface protection element (10) is produced which has at least one flat surface area (13) that merges at the edge into at least one edge area (12) with a rounded cross section and a linear extent.

6. Method according to one of Claims 1 to 5, **characterized in that** the synthetic resin composition is cured by means of UV radiation.

7. Method according to one of Claims 1 to 6, **characterized in that** the scratch protection coating is printed onto a carrier layer (11) made of a three-dimensionally preformed plastic film.

8. Method according to Claim 7, **characterized in that** the carrier element (11) comprises a core layer (11.1) formed from a PET film with a thickness of 50 µm to 300 µm.

9. Method according to Claim 7 or 8, **characterized in that** the carrier element (11) has an adhesion promoter layer (11.2) on an underside that is not to be printed.

## Revendications

1. Procédé de production d'un élément de protection de surface tridimensionnel (10) destiné à un boîtier d'un appareil électronique (200), une composition de résine synthétique durcissable étant imprimée sous forme de gouttelettes (1) pixel par pixel suivant une trame d'impression sur un substrat se présentant sous la forme d'un élément de support tridimensionnel (11) ou d'une zone de surface tridimensionnelle (201) de l'appareil (200) afin de former un revêtement anti-rayures (15), puis la composition de résine synthétique imprimée (1) étant ensuite durcie, dans un procédé d'impression en résine synthétique.

2. Procédé selon la revendication 1, **caractérisé en ce que**, avant l'impression du revêtement anti-rayures (15), un film de séparation est appliqué sur le substrat et le revêtement anti-rayures (15) est imprimé sur le film de séparation.

3. Procédé selon la revendication 1, **caractérisé en ce que**, avant l'impression du revêtement anti-rayures (15), une couche de séparation est imprimée sous forme de gouttelettes (1) pixel par pixel suivant une trame d'impression sur le substrat et durcie, et **en ce que** le revêtement anti-rayures (15) est ensuite imprimé sur la couche de séparation.

4. Procédé selon l'une des revendications 1 à 3, **caractérisé en ce qu'**une épaisseur de couche plus importante de la composition de résine synthétique (1) est imprimée dans la zone d'un bord arrondi (12 ; 202) du substrat que dans des zones de surface planes adjacentes du substrat.

5. Procédé selon l'une des revendications 1 à 4, **caractérisé en ce qu'**un élément de protection de surface (10) est fabriqué qui comporte au moins une zone de surface plane (13) qui se transforme côté bord en au moins une zone de bord (12) arrondi en coupe transversale qui présente une extension linéaire.

6. Procédé selon l'une des revendications 1 à 5, **caractérisé en ce que** la composition de résine synthétique est durcie à l'aide d'un rayonnement UV.

7. Procédé selon l'une des revendications 1 à 6, **caractérisé en ce que** le revêtement anti-rayures est imprimé sur une couche de support (11) formée d'un film de matière synthétique préformé en trois dimensions.

8. Procédé selon la revendication 7, **caractérisé en ce que** l'élément de support (11) comprend une couche centrale (11.1) formée d'un film PET d'une épaisseur de 50 µm à 300 µm.

9. Procédé selon la revendication 7 ou 8, **caractérisé en ce que** l'élément de support (11) comporte une couche de promoteur d'adhérence (11.2) sur un côté inférieur qui n'est pas à imprimer.
